# EUROPEAN PATENT SPECIFICATION

(11) **EP 0 297 792 B1**
(45) Date of publication and mention of the grant of the patent: **03.03.1993**
(21) Application number: 88305775.4
(22) Date of filing: 24.06.1988
(51) Int. Cl.: C09J 133/08, C08F 220/18, C09J 7/00, C09J 7/02

(54) **Heat activatable adhesive**
Wärmeaktivierbarer Klebstoff
Colle activable à chaud

(30) Priority: 02.07.1987 US 65657
(43) Date of publication of application: 04.01.1989
(73) Proprietor: MINNESOTA MINING AND MANUFACTURING COMPANY, St. Paul, Minnesota 55133-3427 (US)
(72) Inventor: Levens, Dennis L. Minnesota Mining and, St. Paul Minnesota 55133-3427 (US)
(74) Representative: Baillie, Iain Cameron

(56) References cited:
- CH-A- 408 416
- DE-A- 2 524 197
- FR-A- 2 295 048
- US-A- 3 836 227
- US-A- 4 164 614

## Description

### Technical Field

This invention relates to heat-activatable adhesive compositions. The invention further relates to adhesive films or tapes comprising such heat-activatable adhesive compositions.

### Background Art

Heat-activatable adhesives are well known in the art. A heat-activatable adhesive, as used herein, is one that becomes aggressively tacky and bonds to a substrate upon heating to a characteristic temperature known as a bonding temperature. Although some may be pressure-sensitive, the typical heat-activatable adhesive is not tacky at room temperature. It has a narrow melting point range, and may not become tacky until heated to within about 10°C of the bonding temperature. As the bonding temperature is approached, the adhesive begins to flow and has virtually no strength at the bonding temperature; mechanical support may therefore be required until the adhesive has cooled and a strong bond has been formed.

Although the heat-activatable adhesives are convenient to use and tend to form strong bonds, they have one problem which renders their use unacceptable in many applications. Typical heat-activatable adhesives exhibit thermoplastic behavior; if subjected to temperatures within the melting range after bonding they will again soften and weaken, frequently to the point of failure. Thus they cannot be used where it is necessary to subject the bonded adhesives to a temperature equal to or above the bonding temperature.

Among the operations which subject bonded adhesives to such elevated temperatures are manufacture of vinyl flooring and processing of asphalt shingles. These operations may subject adhesive bonds to temperatures as high as 260°C.

Various methods of improving heat resistance of heat-activatable adhesives have been attempted. It is known that the heat resistance of adhesive compositions can be improved by incorporating crosslinking agents into the compositions. Crosslinking agents known in the art include those described in the following patents. Polyepoxides and an optional epoxy polymerization catalyst are disclosed in U.S. Patent No. 3,723,568 (Hoeschele). Isophthaloyl biscaprolactam and vinyl triethoxysilane are used as crosslinkers in U.S. Patent No. 4,137,364 (Ball et al.) for an ethylene/vinyl acetate/vinyl alcohol terpolymer. U.S. Patent No. 4,116,937 (Jones et al.) discloses flexible polyamino bis-maleimides formed by the reaction of an aromatic diamine with an aromatic maleimide. U.S. Patent No. 2,978,286 (Ulrich) discloses organic peroxide crosslinkers. Another crosslinker for adhesives is taught by U.S. Patent No. 2,925,174, (Stow), which discloses the reaction of an acrylate copolymer with a polyfunctional compound such as a polyamine, polyol, or a polyepoxide. U.S. Patent No. 4,467,071, (Dawdy) discloses mixtures of at least one epoxy resin and one olefinically unsaturated organic partial ester of a phosphorous acid.

Other methods of improving heat-resistance have also been attempted. U.S. Patent No. 4,248,748 (McGrath) discloses a heat-activatable adhesive comprising a pressure-sensitive acrylate polymer and a tackifying resin, U.S. Patent No. 4,199,646 (Hori) discloses a heat activatable pressure-sensitive adhesive tape or film comprising an acrylic copolymer, an ethylenically unsaturated monomer,and a reactive hot melt resin capable of reacting with the acrylate copolymer either directly or through a crosslinking agent. Hot melt resins disclosed to react directly include epoxy resins, and phenolic resins. U.S. Patent No. 4,052,527 (Pastor) discloses acrylate-based hot melt pressure-sensitive adhesives wherein prepolymers are heated, coated and then exposed to ultraviolet light in order to induce crosslinking.

U.S. Patent No. 4,164,614 (Ames) discloses hot melt pressure sensitive adhesive compositions comprising a moderately polar comonomer which is outside the concentration range for the moderately polar monomer specified in this invention.

U.S. Patent No. 3,836,227 (Holmen) discloses a thermo plastic heat activatable adhesive copolymer of 50-80 weight percent isooctyl acrylate and 20-50 weight percent acrylic acid.

DE-A-2,524,197 discloses a terpolymer containing as essential components specific comonomers which render the disclosure outside the scope of the subject invention.

Despite the improvements in heat resistance resulting from the various developments in the art, the commercially available acrylate copolymer adhesives do not provide adhesive bonds which will retain their strength when heated to temperatures at or above their bonding temperatures. Such adhesives cannot be used in applications subjecting the bonds to highly elevated temperatures, i.e. above 150°C, such as those discussed above.

### Summary of the Invention

It has now been discovered by the present inventor that certain acrylate copolymers provide high strength bonds which surprisingly retain their strengths when reheated to temperatures at or above the original bonding temperatures without the addition of cross-linking agents. The present invention provides an adhesive which shows little or no tack at room temperature and becomes aggressively tacky (pressure sensitive) when heated. The novel heat-activatable adhesive compositions of the invention are thermally self-crosslinking, requiring only the application of heat to crosslink. Preferred adhesives of the invention form strong bonds which retain their strengths to 200°C or higher.

In a further aspect, the invention provides heat-activatable transfer films and tapes wherein the adhesive layer comprises a self-crosslinking, heat-activatable acrylate copolymer which forms strong bonds that retain their strength when subsequently heated to temperatures above the bonding temperature.

The self-crosslinking, heat-activatable adhesive composition of the present invention consists essentially of a copolymer containing
(a) one or more monomers which are predominantly alkyl acrylate, the alkyl groups of which have from 4 to 14 carbon atoms, the average being from 4 to 12 carbon atoms, at least a portion of said monomers having a carbon-to-carbon chain of at least 4 carbon atoms terminating at the hydroxyl oxygen atom, and
(b) correspondingly, from about 60% to about 35% of either
   (i) a mixture of acrylic acid and N-vinyl pyrrolidone, or
   (ii) a moderately polar monomer selected from the group consisting of N-vinyl pyrrolidone, N-vinyl caprolactam, acrylonitrile, and vinyl chloride
whereby said adhesive composition is capable of self-crosslinking when heated to within 10°C of its bonding temperature and whereby said adhesive composition forms strong bonds which do not weaken or remelt when heated to temperatures at or above the bonding temperature.

Unless otherwise noted, all percents, parts and ratios herein are by weight.

### Detailed Description of the Invention

The alkyl acrylate monomers useful in the present invention are monofunctional unsaturated acrylate ester monomers. Included within this class of monomers are, for example, isooctyl acrylate, isononyl acrylate, 2-ethyl-hexyl acrylate, decyl acrylate, dodecyl acrylate, n-butyl acrylate and hexyl acrylate. Preferred monomers include isooctyl acrylate, isononyl acrylate, and butyl acrylate.

Polarity or hydrogen-bonding ability is frequently described by the use of terms such as "poorly", "moderately", and "strongly". References describing these and other solubility terms include "Solvents", Paint Testing Manual, 3rd Ed., Seward, G.G., Editor, American Society for Testing and Materials, Phila.,Pa., 1972, and "A Three-Dimensional Approach to Solubility", Journal of Paint Technology, 38,No. 496,pp. 269-280. Strongly polar monomers useful herein include acrylic acid, itaconic acid, hydroxyalkyl acrylates, cyanoalkyl acrylates, acrylamides, and substituted acrylamides; moderately polar monomers useful herein are N-vinyl pyrrolidone, N-vinyl caprolactam, acrylonitrile, and vinyl chloride.

When either these moderately polar monomers alone or the alternatively specified mixture of moderately and strongly polar monomers are used, the polar monomers preferably comprise from 60% to 35%, more preferably from 55% to 40% of the copolymer.

The levels of the copolymerizable monomers are critical for the benefits of the invention to be seen. When less than 35% of either a mixture of moderately and strongly polar monomers or solely moderately polar monomers are used, the adhesive exhibits typical thermoplastic behavior when heated, i.e. flowing whenever the bonding temperature is approached. This indicates that no self-crosslinking has occurred. Such adhesive compositions do not form bonds which will retain their strength when reheated to temperatures at or above the bonding temperature as do adhesive compositions of the invention. Using over 60% of moderately polar monomers results in an unacceptable adhesive requiring progressively higher temperatures and longer periods of time to melt and bond properly. Thus, adhesive compositions having copolymers with similar monomers but with ratios outside the range of the invention would fail to develop the characteristic high strength bonds which retain their strength during subsequent reheating to temperatures above the original bonding temperature. The preferred adhesives of the invention retain high bond strengths at temperatures from 200°C to 260°C.

It is believed that proper selection of the level of polar monomer(s) results in a self-crosslinkable copolymer which cures at or near (within 10°C of) its bonding temperature. Thus, the bond does not weaken or remelt when heated to temperatures similar to or even above the original bonding temperature. Typically, splices made with transfer films comprising adhesive compositions of the invention withstand elevated temperatures for extended periods of time. The material being spliced frequently fails prior to any failure of the splice.

The specified adhesive composition mixture may also contain a free-radical initiator to aid in polymerization of the monomers. Such initiators can be thermal initiators or photoinitiators, preferred thermal initiators include 2,2-bis-isobutylnitrile, commercially available from DuPont under the tradename Vazo. Photoinitiators that are useful for polymerizing the acrylate monomer include the benzoin ethers, substituted benzoin ethers such as benzoin methylether or benzoin isopropyl ether, substituted acetophenones such as 2,2-diethoxy-acetophenone, and 2,2-dimethoxy-2-phenyl-acetophenone, substituted alpha-ketols such as 2-methyl-2-hydroxy-propiophenone, aromatic sulphonyl chlorides such as 2-naphthalene sulphonyl chloride and photoactive oximes such as 1-phenyl-1,1-propanedione-2-(O-ethoxycarbonyl) oxime. Generally the photoinitiator is present in an amount of 0.01 percent to 1.0 percent based on the weight of the monomers.

Adhesives of the invention are particularly useful in the manufacture of asphalt roofing shingles and vinyl flooring, both of which frequently use fiberglass as a reinforcing web. This web is saturated with an appropriate thermoplastic composition to form the finished product, liquid asphalt for the shingles, polyvinylchloride for the flooring. This is generally accomplished via a continuous processing line. The fiberglass web is supplied in small feed rolls which must be spliced together prior to processing on such a line. If the splice is formed by sewing, points of weakness are introduced into the web wherever stitched. Adhesive splices are therefore preferred. However, most adhesives cannot withstand the temperatures of the process. In the case of roofing shingles, the asphalt may be coated at temperatures of 250°C or higher. Traditional acrylate adhesives will fail within a few seconds at these temperatures. Such failure results in separation of the splice, and breakdown of the processing operation. Adhesives of the present invention form strong bonds which will, when used for such splices, retain their strength to the processing temperatures without adhesive failure.

### Method of Manufacture

The adhesive composition of the invention is preferably prepared by the methods of U.S. Patent Nos. 4,303,485 (Levens) or 4,181,752 (Martens), both assigned to the assignee of the present invention. However, the composition may be prepared by any of the methods known in the art.

Application of the adhesive composition to a backing or substrate may be accomplished using any conventional means such as roller coating, dip coating or extrusion coating. The backing to which the adhesive is applied must be selected from those materials also having the ability to withstand the temperatures required for the processes desired, i.e. up to 260°C. These materials include polyimides, metal foils, nonwovens, fiberglass, Kevlar™ and Teflon™ polymers.

If the composition is to be used in transfer film form, a heat-activatable transfer film may be made by applying the adhesive to a release liner such as a silicone coated paper. After curing, it may be stripped from the release liner and used as a film.

If the adhesive composition is to be used as a tape, it is coated onto a flexible carrier web and polymerized.

The following test procedure has been used to evaluate the various heat activatable adhesive compositions.

### Test Procedure

### Overlap Splice Test

A piece of the polymerized acrylic film measuring 2.5 cm x 7.6 cm was removed from the silicone liner and placed between two pieces of 60 g/m² fiberglass mat to form a composite. Each mat was 0.63 mm thick. This composite was placed in a 6.89 kPa (1 psi) (5.08 Kp) pressure press and heated at 232°C for twenty seconds, then removed. The composite was then hung in an oven so that the fiberglass mat was clamped at the top with the adhesive film being the only supporting medium. A 1 kg. weight was attached to the bottom of the mat. The compositive was then heated at about 275°C until either the adhesive or the fiberglass mats themselves failed.

The following specific, but nonlimiting examples will serve to illustrate the present invention. The examples employ materials as follows:
IOA:isooctyl acrylate
AA:acrylic acid
NVP:N-vinyl-2-pyrrolidone
BA:N-butyl acrylate
IRG:"Irgacure"651 (a 2,2'-dimethoxy-2-phenyl acetophenone photoinitiator available from Ciba-Geigy Corp.)
VAZO:(a 2,2'-bis isobutyronitrile thermal initiator commercially available from DuPont)
PET:polyethylene terephthalate

### Comparative Example 1

A mixture of 98 parts by weight of IOA, 2 parts by weight of AA and .02 parts by weight of IRG was partially polymerized in an inert atmosphere (nitrogen) by exposure to ultraviolet radiation to provide a coatable syrup of 300-2000 cps Brookfield viscosity. The syrup was then coated with a knife coater onto a silicone coated paper based release liner at a thickness of 200 µm and then polymerized to a tack-free film by exposure to ultraviolet radiation in a nitrogen atmosphere. The resultant film was die cut into a 2.5 cm x 7.6 cm piece and tested according to the overlap splice test described earlier. The results are shown in Table I.

### Comparative Example 2

These were made according to Example 1 except the IOA and AA levels were changed such that the AA levels were 5 parts, 10 parts, 20 parts, 30 parts, 35 parts, 40 parts, 45 parts and 50 parts by weight respectively of the total syrup. The resultant films were tested as in Example 1 and recorded in Table I.

### Example 10

This was made according to the method of Example I except 60 parts IOA and 40 parts NVP were substituted. The resultant film was tested and the results reported as above.

### Example 11

This was made according to the method described in Example 10 except 50 parts of IOA and 50 parts of NVP by weight were used. The film was again tested and reported as above.

### Comparative Examples 12-13

These were made according to the method described in Example I except BA was used in place of IOA and the levels of BA in the resultant syrup were 60 and 50 parts respectively. The films were again tested and reported as above.

### Example 14

This was made according to the method described in Examples 12-13 except 60 parts of NVP was used instead of AA and the test results are shown in Table I.

### Example 15

A mixture of 50 parts IOA, 20 parts AA, 30 parts NVP and .2 parts IRG was partially polymerized in an inert atmosphere (nitrogen) by exposure to ultraviolet radiation to provide a coatable syrup of 0.3-2.0 Pas (300-2000 cps) Brookfield viscosity. The 3 monomer systems in the mixture were added one at a time with stirring. The resultant syrup was then coated with a knife coater onto a PET liner at a thickness of 125um. The coat was covered with a second PET liner and then exposed to ultraviolet radiation. The resultant film was tested and reported as in Example I.

### Comparative Example 16

An adhesive formulation of this invention was also made with the well known solution polymerization techniques. Into a 750 ml brown bottle was placed 65 parts of IOA, 35 parts of AA, 0.1 parts of VAZO and 312 parts of ethyl acetate. The bottle and its contents was purged with nitrogen for 5 minutes and sealed. The bottle was then agitated for 24 hours in a 60°C water bath and the resulting solution was knife coated onto a silicone treated PET film and dried for 10 minutes at 70°C in a forced air oven. A tack-free heat bondable adhesive film of 100 µm thick was obtained. The film was tested as above and reported in Table I.

| Adhesive Compositions | | | | | | | |
|---|---|---|---|---|---|---|---|
| Example | IOA | BA | AA | NVP | IRG | VAZO | Time to Fail |
| *1 | 98 | | 2 | | 0.20 | | <10 seconds |
| *2 | 95 | | 5 | | 0.20 | | 10 seconds |
| *3 | 90 | | 10 | | 0.20 | | 15 seconds (average) |
| *4 | 80 | | 20 | | 0.20 | | 22 seconds (average) |
| *5 | 70 | | 30 | | 0.20 | | over 24 hours |
| *6 | 65 | | 35 | | 0.20 | | over 24 hours |
| *7 | 60 | | 40 | | 0.20 | | over 24 hours |
| *8 | 50 | | 50 | | 0.20 | | over 24 hours |
| *9 | 45 | | 55 | | 0.20 | | film too brittle to use |
| 10 | 60 | | | 40 | 0.20 | | over 24 hours |
| 11 | 50 | | | 50 | 0.20 | | over 24 hours |
| *12 | | 60 | 40 | | 0.20 | | over 24 hours |
| *13 | | 50 | 30 | | 0.20 | | over 24 hours |
| 14 | | 40 | | 60 | 0.20 | | over 24 hours |
| 15 | 50 | | 20 | 30 | 0.20 | | over 24 hours |
| *16 | 65 | | 35 | | | 0.10 | over 24 hours |

| | | | | | | | |
|---|---|---|---|---|---|---|---|
| ***Comparative Examples** | | | | | | | |

## Claims

1. A heat-activatable adhesive composition which is non-tacky at room temperature and can form strong bonds which do not weaken or re-melt when heated to temperatures at or above the bonding temperature, said adhesive composition consisting essentially of a copolymer containing:
(a) one or more monomers which are predominantly alkyl acrylate, the alkyl groups of which have from 4 to 14 carbon atoms, the average being from 4 to 12 carbon atoms, at least a portion of said monomers having a carbon-to-carbon chain of at least 4 carbon atoms terminating at the hydroxyl oxygen atom, and
(b) correspondingly, from about 60% to about 35% of either
i) a mixture of acrylic acid and N-vinyl pyrrolidone, or
ii) a moderately polar monomer selected from the group consisting of N-vinyl pyrrolidone, N-vinyl caprolactam, acrylonitrile, and vinyl chloride
whereby said adhesive coposition is capable of self-crosslinking when heated to within 10°C of its bonding temperature.

2. A heat-activatable adhesive composition according to claim 1 wherein said alkyl acrylate is isooctyl acrylate, isononyl acrylate, 2-ethyl-hexyl acrylate, decyl acrylate, dodecyl acrylate, n-butyl acrylate or hexyl acrylate.

3. A heat-activatable adhesive composition according to claim 1 wherein said alkyl acrylate is isooctyl acrylate, isononyl acrylate or butyl acrylate.

4. A heat-activatable adhesive composition according to any preceding claim further comprising a photoinitiator.

5. An adhesive composition according to claim 1 comprising:
(a) from about 40% to about 65% isooctyl acrylate, and
(b) correspondingly, from about 60% to about 35% of a mixture of acrylic acid and N-vinyl pyrrolidone.

6. A heat-activatable adhesive tape comprising a flexible carrier and an adhesive layer as claimed in any of claims 1 to 5.

7. A heat-activatable transfer film having a silicone-coated release liner and an adhesive layer according to any of claims 1 to 5.

## Patentansprüche

1. Wärmeaktivierbare Klebstoffzusammensetzung, die bei Zimmertemperatur nicht klebfähig ist und die feste stoffschlüssige Bindungen bildet, die bei einer Erwärmung auf oder über die Bindetemperatur nicht geschwächt werden oder schmelzen, wobei die Klebstoffzusammensetzung im wesentlichen aus einem Copolymer besteht, das enthält:
(a) ein oder mehrere Monomere, die vorwiegend aus Alkylacrylat bestehen, dessen Alkylgruppen 4 bis 14 Kohlenstoffatome und durchschnittlich 4 bis 12 Kohlenstoffatome besitzen, und mindestens ein Teil der Monomere eine an dem Hydroxylsauerstoffatom endende Kohlenstoff-Kohlenstoff-Kette mit mindestens 4 Kohlenstoffatomen besitzt; und
(b) entsprechend etwa 60 bis etwa 15% entweder
i) eines Gemisches aus Acrylsäure und N-Vinylpyrrolidon oder
ii) eines mäßig polaren Monomers, das aus der Gruppe ausgewählt ist, die aus dem N-Vinylpyrrolidon, N-Vinylcaprolactam, Acrylnitril und Vinylchlorid besteht;
und die Klebstofftemperatur bei ihrer Erwärmung auf eine höchstens 10°C unter ihrer Bindetemperatur liegenden Temperatur selbstvernetzbar ist.

2. Wärmeaktivierbare Klebstoffzusammensetzung nach Anspruch 1, dadurch gekennzeichnet, daß das Alkylacrylat Isooctylacrylat, Isononylacrylat, 2-Ethylhexylacrylat, Decylacrylat, Dodecylacrylat, n-Butylacrylat oder Hexylacrylat ist.

3. Wärmeaktivierbare Klebstoffzusammensetzung nach Anspruch 1, dadurch gekennzeichnet, daß das Alkylacrylat Isooctylacrylat, Isononylacrylat oder Butylacrylat ist.

4. Wärmeaktivierbare Klebstoffzusammensetzung nach einem der vorhergehenden Ansprüche mit einem Photoinitiator.

5. Klebstoffzusammensetzung nach Anspruch 1 mit
(a) etwa 40 bis etwa 65% Isooctylacrylat und
(b) entsprechend etwa 60 bis etwa 35% eines Gemisches aus Acrylsäure und N-Vinylpyrrolidon.

6. Wärmeaktivierbares Klebeband mit einem flexiblen Träger und einer Klebstoffschicht nach einem der Ansprüche 1 bis 5.

7. Wärmeaktivierbare Umdruck-Feinfolie mit einer silikonüberzogenen Antihaftauflage und einer Klebstoffschicht nach einem der Ansprüche 1 bis 5.

## Revendications

1. Composition adhésive activable par la chaleur, qui n'est pas collante à la température ambiante et peut former de fortes liaisons qui ne sont pas affaiblies ou ne sont pas l'objet d'une refusion lorsqu'on élève la température à des valeurs égales ou supérieures à la température de collage, ladite composition adhésive étant pour l'essentiel constituée d'un copolymère contenant :
(a) un ou plusieurs monomères qui sont, de manière prépondérante, un acrylate d'alkyl dont les radicaux alkyl contiennent 4 à 14 atomes de carbone, la moyenne étant comprise entre 4 et 12 atomes de carbone, au moins une partie desdits monomères comportant une chaîne carbone-carbone d'au moins 4 atomes de carbone se terminant par l'atome d'oxygène de l'hydroxyle, et
(b) en proportion complémentaire, d'environ 60 % à environ 35 % :
(i) soit d'un mélange d'acide acrylique et de N-vinylpyrrolidone,
(ii) soit d'un monomère modérément polaire choisi dans le groupe constitué par la N-vinylpyrrolidone, le N-vinylcaprolactame, l'acrylonitrile et le chlorure de vinyle,
ladite composition adhésive pouvant être l'objet d'une autoréticulation lorsque sa température est élevée à une valeur qui ne diffère pas de sa température de collage de plus de 10 °C.

2. Composition adhésive activable par la chaleur suivant la revendication 1, dans laquelle l'acrylate d'alkyl est l'acrylate d'isooctyle, l'acrylate d'isononyle, l'acrylate d'éthyl-2 hexyle, l'acrylate de décyle, l'acrylate de dodécyle, l'acrylate de n-butyle ou l'acrylate d'hexyle.

3. Composition adhésive activable par la chaleur suivant la revendication 1, dans laquelle l'acrylate d'alkyl est l'acrylate d'isooctyle, l'acrylate d'isononyle ou l'acrylate de butyle.

4. Composition adhésive activable par la chaleur suivant l'une quelconque des revendications précédentes, comprenant en outre un photo-initiateur.

5. Composition adhésive suivant la revendication 1, comprenant :
(a) d'environ 40 % à environ 65 % d'acrylate d'isooctyle et
(b) en proportion complémentaire, d'environ 60 % à environ 35 % d'un mélange d'acide acrylique et de N-vinylpyrrolidone.

6. Ruban adhésif activable par la chaleur, comprenant un support souple et une couche adhésive suivant l'une quelconque des revendications 1 à 5.

7. Film de transfert activable par la chaleur, comprenant une doublure anti-adhésive revêtue de silicone et une couche adhésive suivant l'une quelconque des revendications 1 à 5.
